# EUROPÄISCHE PATENTSCHRIFT

(11) **EP 3 263 938 B1**
(45) Veröffentlichungstag und Bekanntmachung des Hinweises auf die Patenterteilung: **21.10.2020**
(21) Anmeldenummer: 16305789.6
(22) Anmeldetag: 29.06.2016
(51) Int. Cl.: F16D 3/74, F16D 3/38

(54) **ELASTISCHE KUPPLUNG FÜR LANDWIRTSCHAFTLICHE ANTRIEBE**
FLEXIBLE COUPLING FOR AGRICULTURAL DRIVES
ACCOUPLEMENT ELASTIQUE POUR ENTRAINEMENT AGRICOLE

(43) Veröffentlichungstag der Anmeldung: 03.01.2018
(73) Patentinhaber: Walterscheid GmbH, 53797 Lohmar (DE); Kuhn SAS, 67700 Saverne (FR)
(72) Erfinder: BARTHEN, Pascal, 57600 Forbach (FR); SCHÄFER, Uwe, 53773 Hennef (DE); TEITGEN, Hervé, 57370 Phalsbourg (FR); RUI, Pascal, 67370 Kleinfrankenheim (FR)
(74) Vertreter: Neumann Müller Oberwalleney & Partner Patentanwälte

(56) Entgegenhaltungen:
- DE-A1-102010 053 419
- DE-A1-102011 079 528
- DE-B- 1 188 384
- DE-B3-102011 015 024

## Beschreibung

Die Erfindung betrifft eine elastische Kupplung für landwirtschaftliche Antriebe, die um eine Drehachse drehend antreibbar ist und zwei Kupplungselemente und ein elastisches Element, das zwischen den beiden Kupplungselementen angeordnet ist, aufweist.

Derartige elastische Kupplungen sind allgemein bekannt, zum Beispiel aus der DE 10 2006 053 282 A1 oder der DE 10 2011 015 024 B3. Die in der DE 10 2006 053 282 A1 gezeigte elastische Wellenkupplung weist zwei zueinander axial beabstandete Kupplungsteile auf, zwischen denen wenigstens ein Elastomerelement vorgesehen ist, das an einander zugewandten Stirnseiten der Kupplungsteile an diese anvulkanisiert ist. Im Betrieb der Kupplung rotieren die Kupplungsteile und das wenigstens eine, mit diesem verbundene, Elastomerelement. Dabei wird das Elastomerelement auf Scherung und Torsion beansprucht. Zudem nimmt das Elastomerelement Vibrationen und Schwingungen auf. Hierbei muss die Verbindung zwischen dem Elastomerelement und den Kupplungsteilen derart ausgebildet sein, dass das gesamte Spitzendrehmoment, für das die Kupplung ausgelegt ist, übertragen werden kann.

Die Kupplung gemäß der DE 10 2011 015 024 B3 zeigt ein Koppelelement in Form eines Gummirings, das zwischen zwei Flanschen angeordnet ist. Stahlstifte sind mit den beiden Flanschen verbunden. Erste Stahlstifte sind mit einem ersten der beiden Flansche verbunden und zweite Stahlstifte mit einem zweiten der beiden Flansche, wobei die ersten und zweiten Stahlstifte in Umfangsrichtung betrachtet abwechselnd in Bohrungen des Gummirings eingreifen, so dass Drehmoment zwischen den beiden Flanschen über den Gummiring übertragen wird.

Eine andere elastische Kupplung ist aus der GB 2 385 034 B bekannt. Diese weist ebenfalls zwei Kupplungselemente auf, die axial zueinander beabstandet sind und zwischen denen ein Elastomerelement angeordnet ist. Das Elastomerelement ist mit beiden Kupplungselementen fest verbunden, zum Beispiel verklebt. Auch hier wird das gesamte Drehmoment über die Verbindung zwischen dem Elastomerelement und den Kupplungselementen übertragen. Um im Falle des Versagens des Elastomerelements bzw. der Verbindungen zwischen dem Elastomerelement und den Kupplungselementen, einen Ausfall der Kupplung zu verhindern, weist die Kupplung einen Bolzen auf, der durch Durchbrüche der Kupplungselemente und einen Durchbruch des Elastomerelements hindurchgeführt ist. Der Bolzen ist gegen axiales Herausziehen gesichert und sitzt mit Spiel in den Durchbrüchen, wobei der Bolzen mit elastischen Material umgeben ist. Der Bolzen dient als Ausfallsicherung und überträgt im normalen Betrieb der elastischen Kupplung kein Drehmoment und ist auch in axialer Richtung nicht verspannt. Der Bolzen ist also im normalen Betrieb nicht beansprucht. Lediglich, wenn das Elastomerelement oder eine der Verbindungen zwischen dem Elastomerelement und einem der Kupplungselemente versagt, wird Drehmoment zwischen den beiden Kupplungselementen über den Bolzen übertragen.

Aufgabe der vorliegenden Erfindung ist es, eine kompakte elastische Kupplung mit hoher Drehmomentkapazität bereitzustellen.

Gelöst wird die Aufgabe durch eine elastische Kupplung gemäß Anspruch 1. Hierbei ist das zumindest eine elastische Element zwischen den beiden Kupplungselementen mittels zumindest einer Spanneinrichtung axial eingespannt. Hierbei kann das elastische Element mit einer Winkelvorspannung zwischen den beiden Kupplungselementen montiert sein, so dass sich bereits im unbelasteten Zustand eine Vorspannung des elastischen Elements in einer Drehrichtung ergibt.

Durch das Einspannen des elastischen Elements kann durch die Spannkraft der Spanneinrichtung die Dämpfungseigenschaft eingestellt werden.

Diese elastische Kupplung kann auf landwirtschaftlichen Maschinen verwendet werden. Die elastische Kupplung kann dabei in der kinematischen Kette eines Antriebsstrangs angeordnet werden. Landwirtschaftliche Maschinen sind zum Beispiel Kreiseleggen, Bodenfräsen, Schredder, Steinbrecher, Mähmaschinen, Futtermaschinen oder ähnliche Maschinen.

Vorzugsweise ist das elastische Element separat von den beiden Kupplungselementen ausgebildet, d.h. es ist nicht mit diesen stoffschlüssig verbunden oder anderweitig integral mit diesen ausgebildet. Hierdurch wird ermöglicht, dass durch Austauschen des elastischen Elements verschiedene elastische Elemente mit verschiedenen Steifigkeiten und Drehmomentkapazitäten eingesetzt werden können. Grundsätzlich ist es jedoch auch möglich, dass das elastische Element fest mit einem oder beiden Kupplungselementen verbunden ist, zum Beispiel wenn das elastische Element als Elastomerelement ausgebildet ist und mit einem oder beiden Kupplungselementen verklebt oder an diese anvulkanisiert ist.

In einer Ausgestaltung kann die elastische Kupplung einen Zentrierzapfen aufweisen, der koaxial zur Drehachse angeordnet ist und fest mit dem ersten Kupplungselement verbunden ist. Das zweite Kupplungselement und das elastische Element sind jeweils mit einer zentralen Bohrung auf dem Zentrierzapfen drehbar aufgenommen. Somit können Querkräfte, die auf das zweite Kupplungselement und/oder auf das elastische Element einwirken, von dem Zentrierzapfen aufgenommen werden.

Hierbei kann vorgesehen sein, dass das zweite Kupplungselement über eine Gleitlagerbuchse auf dem Zentrierzapfen gelagert ist. Über die Gleitlagerbuchse werden Querkräfte besonders gut von dem zweiten Kupplungselement auf den Zentrierzapfen übertragen. Darüber hinaus eignet sich die Gleitlagerbuchse besonders für die Lagerung zueinander hin- und her schwingender Bauteile, nämlich zur Lagerung des zweiten Kupplungselement relativ zum Zentrierzapfen.

Das zweite Kupplungselement kann axial gegen den Zentrierzapfen gesichert sein. Hierdurch wird eine Ausfallsicherheit gewährleistet, für den Fall, dass die zumindest eine Spanneinrichtung ausfällt bzw. bricht. Für diesen Fall wird ein Auseinanderfallen der elastischen Kupplung verhindert.

Die zumindest eine Spanneinrichtung ist hierbei vorzugsweise gegen die beiden Kupplungselemente axial abgestützt, wobei die zumindest eine Spanneinrichtung durch einen Durchbruch im elastischen Element hindurchgeführt ist. Hierdurch ergibt sich eine kompakte Bauweise, bei der die Spanneinrichtungen keinen radialen Bauraum in Anspruch nehmen.

Die zumindest eine Spanneinrichtung kann über Ausgleichsanordnungen gegen die Kupplungselemente abgestützt sein und somit begrenzt quer zur Drehachse gegenüber den Kupplungselementen kippbar sein. Hierdurch wird in verstärktem Maße ermöglicht, dass die Spanneinrichtung ein begrenztes Verdrehen der Kupplungselemente zueinander um die Drehachse ermöglicht. Dabei werden Vibrationen in Drehrichtung vom elastischen Element aufgenommen und von der zumindest einen Spanneinrichtung freigegeben bzw. ermöglicht.

Die Kupplungselemente weisen einander zugewandte Stirnflächen auf, zwischen denen das elastische Element eingespannt ist. Das elastische Element ist somit in Reibkontakt zu den Stirnflächen. Je größer die Stirnflächen und entsprechend gestaltete Anlagenflächen des elastischen Elements gestaltet sind, umso höher ist das übertragbare Drehmoment. Alternativ zum Reibschluss zwischen den Stirnflächen der Kupplungselemente und dem elastischen Element kann das elastische Element auch mit den Kupplungselementen fest verbunden sein, zum Beispiel verklebt oder anvulkanisiert sein.

In Ausgestaltung der elastischen Kupplung ist die zumindest eine Spanneinrichtung durch Durchbrüche in den Kupplungselementen hindurchgeführt. Um hierbei ein Verkippen der Spanneinrichtung quer zur Drehachse zu ermöglichen, können die Durchbrüche zum elastischen Element hin konisch oder stufenförmig erweitert sein. Alternativ ist auch möglich, dass die Durchbrüche ein ausreichendes Radialspiel zu der zumindest einen Spanneinrichtung aufweisen, damit die zumindest eine Spanneinrichtung innerhalb der Durchbrüche gekippt werden kann.

Die zumindest eine Spanneinrichtung kann auf denjenigen Seiten des Kupplungselements axial abgestützt sein, die vom elastischen Element abgewandt sind. Die Spanneinrichtung ist somit auf Zug beansprucht.

Vorzugsweise weist die elastische Kupplung mindestens drei Spanneinrichtungen auf, die um die Drehachse der elastischen Kupplung verteilt angeordnet sind. Je nach erforderlicher Einspannkraft können mehr Spanneinrichtungen vorgesehen werden.

Die zumindest eine Spanneinrichtung kann einen Spannbolzen aufweisen, der über Spannelemente gegen die Kupplungselemente axial abgestützt ist.

Der Spannbolzen kann als Gewindebolzen mit Gewinde ausgebildet sein. Ferner können die Spannelemente als Schraubenkopf, der fest mit dem Gewindebolzen verbunden ist, und als eine auf das Gewinde aufgeschraubte Schraubenmutter ausgebildet sein. Es kann sich somit um eine herkömmliche Schraube mit Gewindebolzen und Schraubenkopf handeln, auf die eine Schraubenmutter aufgeschraubt ist. Die Schraube ist mit dem Schraubenkopf an einem ersten Kupplungselement der beiden Kupplungselemente abgestützt. Über die an einem vom Schraubenkopf entfernten Ende auf den Gewindebolzen aufgeschraubte Schraubenmutter ist die Schraube gegen ein zweites Kupplungselement der beiden Kupplungselemente abgestützt. Die Schraube wird somit durch die Durchbrüche der Kupplungselemente und des elastischen Elements hindurchgesteckt, bis sich der Schraubenkopf der Schraube an einem der beiden Kupplungselemente abstützt. In dieser Position ragt die Schraube auf der vom Schraubenkopf abgewandten Seite der elastischen Kupplung aus dem Durchbruch des gegenüberliegenden Kupplungselements heraus, so dass an diesem Ende der Schraube die Schraubenmutter aufgeschraubt werden kann und somit die beiden Kupplungselemente gegeneinander verspannt werden können.

In einer anderen Ausgestaltung kann auch ein Gewindebolzen ohne Schraubenkopf und mit zwei auf die beiden voneinander abgewandten Enden des Gewindebolzens aufgeschraubten Schraubenmuttern vorgesehen sein.

In einer weiteren Ausgestaltung kann der Spannbolzen ohne Gewinde ausgebildet sein und an seinen beiden freien Endbereichen Sicherungsringe aufweisen, die in Nuten des Spannbolzens einsitzen. Die Sicherungsringe stellen die Spannelemente dar, mit denen der Spannbolzen gegen die Kupplungselemente abgestützt ist.

Um ein Verkippen der zumindest einen Spanneinrichtung zu ermöglichen, kann zumindest eines der Spannelemente über eine Ausgleichsanordnung gegen das erste Kupplungselement oder das zweite Kupplungselement abgestützt sein.

Die Ausgleichsanordnung kann eine Kugelscheibe aufweisen, die in einer Kugelpfanne aufgenommen ist. Die Ausgleichsanordnung weist somit zwei Unterlegscheiben auf, von denen eine die Kugelscheibe und von denen die andere die Kugelpfanne ist. Die Kugelscheibe weist eine konvexe sphärische Kugelfläche auf, mit der diese in eine konkave sphärische Kugelfläche der Kugelpfanne einsitzt. Die Kugelscheibe und die Kugelpfanne weisen einen zentralen Durchbruch auf, durch den die Schraube hindurchgeführt werden kann.

Alternativ kann das Spannelement selbst eine zum jeweiligen Kupplungselement weisende konvexe sphärisch gestaltete Anlagefläche aufweisen, die mit einer passenden konkaven sphärischen Anlagefläche des Kupplungselements in Anlage ist. Es ist zudem möglich, dass nur eine der Anlageflächen vorgesehen ist, die mit einer Kugelscheibe oder Kugelpfanne zusammenwirkt.

In Ausgestaltung der elastischen Kupplung kann vorgesehen sein, dass der Schraubenkopf über eine Federanordnung gegen das erste Kupplungselement abgestützt ist. Alternativ dazu oder zusätzlich kann die Schraubenmutter über eine Federanordnung gegen das zweite Kupplungselement abgestützt sein.

Die Federanordnung weist hierbei vorzugsweise zumindest eine Tellerfeder auf.

Das zumindest eine elastische Element kann in Ausgestaltung der elastischen Kupplung ein Elastomerelement sein.

Um die elastische Kupplung platzsparend in eine Gelenkwelle integrieren zu können, kann vorgesehen sein, dass eines der beiden Kupplungselemente eine Gelenkgabel eines Kreuzgelenks aufweist. Das Kupplungselement mit der Gelenkgabel ist somit Bestandteil eines Kreuzgelenks, so dass weitere Bauteile zum Verbinden der elastischen Kupplung mit dem Kreuzgelenk eines Gelenkwelle nicht erforderlich sind.

Das andere der beiden Kupplungselemente kann ein Verbindungselement zum Verbinden der elastischen Kupplung mit einem Antriebszapfen einer angetriebenen oder anzutreibenden Welle aufweisen.

Ein bevorzugtes Ausführungsbeispiel der elastischen Kupplung wird im Folgenden anhand der Figuren näher erläutert.

### Hierin zeigt

- Figur 1: einen Teillängsschnitt durch eine elastische Kupplung,
- Figur 2: einen Längsschnitt der elastischen Kupplung gemäß Figur 1 im Bereich einer der Ausgleichsanordnungen, und
- Figur 3: einen Längsschnitt einer Gelenkwelle mit einer elastischen Kupplung gemäß Figur 1.

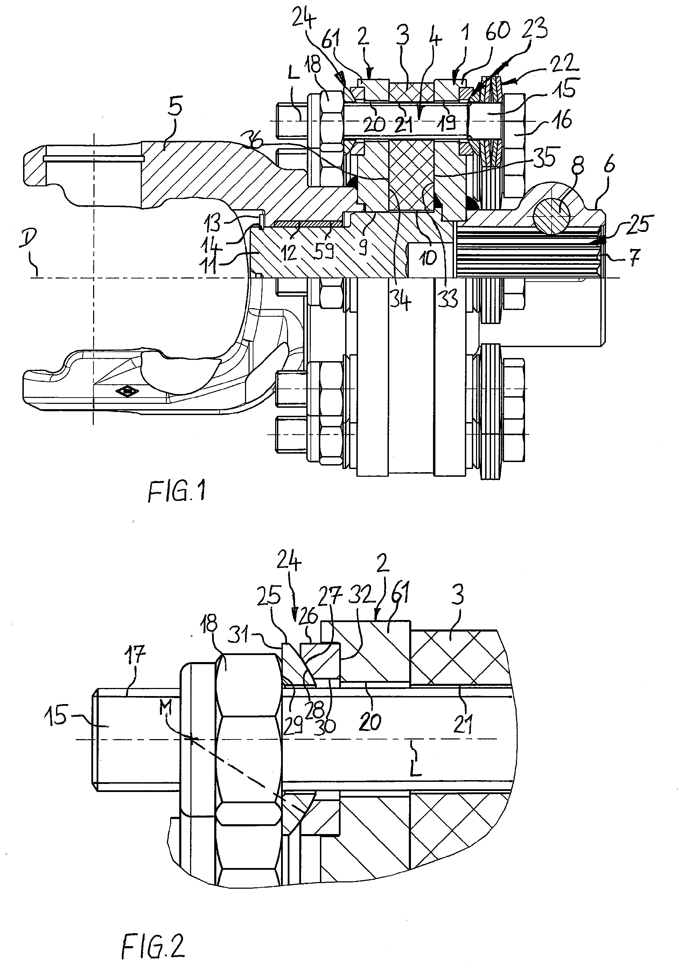

Figur 1 zeigt eine elastische Kupplung im Teillängsschnitt. Die elastische Kupplung ist um eine Drehachse D drehbar. Die elastische Kupplung umfasst ein erstes Kupplungselement 1, ein zweites Kupplungselement 2 und ein elastisches Element in Form eines Elastomerelements 3. Die beiden Kupplungselemente 1, 2 nehmen das Elastomerelement 3 zwischen sich auf und sind entlang der Drehachse D nebeneinander angeordnet. Das erste Kupplungselement 1 und das zweite Kupplungselement 2 sind über eine Spanneinrichtung 4 derart miteinander verspannt, dass sie das Elastomerelement 3 zwischen sich einspannen. Die elastische Kupplung hat die Funktion, Drehmomentspitzen zu dämpfen und nicht axialen oder radialen Versatz zu kompensieren. Während des Betriebs wird die Spanneinrichtung 4 gegenüber der Drehachse D verkippt und erzeugt eine axiale Komprimierung des Elastomerelements 3.

Das erste Kupplungselement 1 weist einen Verschluss 6 auf. Der Verschluss 6 ist im Wesentlichen rohrförmig gestaltet und mit einem plattenförmigen Druckelement 60 des ersten Kupplungselements 1 verschweißt und somit fest mit diesem verbunden. Der Verschluss 6 dient zum Verbinden des ersten Kupplungselements 1 mit einem Antriebszapfen einer angetriebenen oder anzutreibenden Welle. Hierzu weist der Verschluss 6 eine zentrale Bohrung 25 mit Innensplines 7 auf, die mit entsprechenden Außensplines des Antriebszapfens in eine drehfeste Verbindung gebracht werden können. Die Innensplines 7 und die Außensplines können in Form einer Keilwellenverbindung dargestellt sein. Ein Sicherungsstift 8 im Verschluss 6 dient zur Axialsicherung des Verschlusses 6 auf dem Antriebszapfen.

Das zweite Kupplungselement 2 weist eine zentrale Bohrung 9 und das Elastomerelement 3 eine zentrale Bohrung 10 auf, die koaxial zueinander und zur Drehachse D angeordnet sind und demnach miteinander fluchten. Das zweite Kupplungselement 2 und das Elastomerelement 3 sitzen mit ihren zentralen Bohrungen 9, 10 auf einem Zentrierzapfen 11, der koaxial zur Drehachse D angeordnet ist und fest mit dem ersten Kupplungselement 1 verbunden ist.

Das zweite Kupplungselement 2 weist eine Gelenkgabel 5 eines hier nicht vollständig dargestellten Kreuzgelenks auf. Die Gelenkgabel 5 ist mit einem plattenförmigen Druckelement 61 des zweiten Kupplungselements 2 verschweißt und somit fest mit diesem verbunden. Die Gelenkgabel 5 weist eine zentrale Bohrung 12 auf, die koaxial zur Drehachse D angeordnet ist und mit der die Gelenkgabel 5 ebenfalls auf dem Zentrierzapfen 11 sitzt. Das zweite Kupplungselement 2 ist über eine Gleitlagerbuchse 59 auf dem Zentrierzapfen 11 gelagert. Ein Sicherungsring 13 sitzt in einer Außennut 14 des Zentrierzapfens 11 und sichert das zweite Kupplungselement 2 in axialer Richtung auf dem Zentrierzapfen 11.

Drehmoment, das zum Beispiel über den Verschluss 6 eingeleitet wird, wird durch die feste Verbindung des Verschlusses 6 mit dem Druckelement 60 des ersten Kupplungselements 1 auf dieses übertragen. Durch die Verspannung des ersten Kupplungselements 1 mit dem zweiten Kupplungselement 2 über das Elastomerelement 3 wird das Drehmoment über das Elastomerelement 3 auf das zweite Kupplungselement 2 und somit auf die Gelenkgabel 5 übertragen. Die Spanneinrichtungen 4 sind, wie nachfolgend noch erläutert wird, derart ausgestaltet, dass das erste Kupplungselement 1 und das zweite Kupplungselement 2 begrenzte Drehbewegungen zum Ausgleich von Drehschwingungen ausführen können. Somit können sich das Elastomerelement 3, das zweite Kupplungselement 2 und die Gelenkgabel 5 im begrenzten Maße auf dem Zentrierzapfen 11 drehen. Querkräfte, die auf das zweite Kupplungselement 2 oder das Elastomerelement 3 quer zur Drehachse D einwirken, werden hierbei über den Zentrierzapfen 11 aufgenommen.

Die Spanneinrichtungen 4 sind jeweils radial beabstandet zur Drehachse D und über den Umfang gleichmäßig verteilt angeordnet. Sämtliche Spanneinrichtungen 4 sind identisch ausgebildet, wobei im Folgenden die in Figur 1 oben im Längsschnitt dargestellte Spanneinrichtung 4 exemplarisch für alle weiteren Spanneinrichtungen beschrieben wird.

Die Spanneinrichtung 4 umfasst einen Spannbolzen in Form eines Gewindebolzens 15, mit einem fest mit diesem verbundenen Schraubenkopf 16 und einem Gewinde 17. Der Gewindebolzen 15 und der Schraubenkopf 16 bilden zusammen eine herkömmliche Schraube. Auf das Gewinde 17 des Gewindebolzens 15 ist eine Schraubenmutter 18 aufgeschraubt. Das Druckelement 60 des ersten Kupplungselements 1 weist einen Durchbruch 19, das Druckelement 61 des zweiten Kupplungselements 2 einen Durchbruch 20 und das Elastomerelement 3 einen Durchbruch 21 auf, wobei die Durchbrüche 19, 20, 21 der Spanneinrichtung 4 zueinander fluchtend angeordnet sind. Durch die Durchbrüche 19, 20, 21 ist der Gewindebolzen 15 hindurchgesteckt. Der Gewindebolzen 15 stützt sich über den Schraubenkopf 16 gegen das erste Kupplungselement 1 auf einer Seite, die dem zweiten Kupplungselement 2 abgewandt ist, ab. Der Gewindebolzen 15 ist durch die Durchbrüche 19, 20, 21 des ersten Kupplungselements 1, des zweiten Kupplungselements 2 und des Elastomerelements 3 hindurchgeführt, wobei der Gewindebolzen 15 auf der vom ersten Kupplungselement 1 abgewandten Seite des zweiten Kupplungselements 2 aus diesem herausragt. Die Schraubenmutter 18 ist auf dem herausragenden Ende des Gewindebolzens 15 aufgeschraubt. Die Schraubenmutter 18 stützt sich axial gegen das zweite Kupplungselement 2 ab.

Der Schraubenkopf 16 stützt sich über ein Tellerfederpaket 22, welches mehrere Tellerfedern umfasst, und eine Ausgleichsanordnung 23 gegen das erste Kupplungselement 1 ab. Die Schraubenmutter 18 stützt sich über eine Ausgleichsanordnung 24, die identisch zu der Ausgleichsanordnung 23 am Schraubenkopf 16 gestaltet ist, gegen das zweite Kupplungselement 2 ab.

Die Ausgleichsanordnungen 23, 24 ermöglichen ein Verkippen des Gewindebolzens 15 der einzelnen Spanneinrichtungen 4 gegenüber den Kupplungselementen 1, 2, um ein begrenztes Verdrehen des ersten Kupplungselements 1 zum zweiten Kupplungselement 2 zu ermöglichen. Die beiden Ausgleichsanordnungen 23, 24 sind identisch aufgebaut, wobei im Folgenden die in Figur 1 links dargestellte Ausgleichsanordnung 24 exemplarisch für beide Ausgleichsanordnungen 23, 24 beschrieben wird. In diesem Zusammenhang wird auf Figur 2 Bezug genommen wird, welche einen vergrößerten Teillängsschnitt der elastischen Kupplung im Bereich dieser Ausgleichsanordnung 24 zeigt.

Die Ausgleichsanordnung 24 weist eine Kugelscheibe 25 und eine Kugelpfanne 26 auf, die miteinander in Kontakt sind. Die Kugelscheibe 25 weist eine der Kugelpfanne 26 zugewandte konvexe Kugelfläche 27 auf, welche in eine konkave Kugelfläche 28 der Kugelpfanne 26 eintaucht und mit dieser in Anlage ist. Die konvexe Kugelfläche 27 und die konkave Kugelfläche 28 weisen einen geometrischen Mittelpunkt M auf, um den die Kugelscheibe 25 zur Kugelpfanne 26 gekippt werden kann.

Die Kugelscheibe 25 weist einen zentralen Durchbruch 29 auf und die Kugelpfanne 26 weist einen zentralen Durchbruch 30 auf, wobei der Gewindebolzen 15 durch die zentralen Durchbrüche 29, 30 der Kugelscheibe 25 und der Kugelpfanne 26 hindurchgeführt ist.

Die Kugelscheibe 25 weist zudem eine Ringfläche 31 auf, gegen die sich die Schraubenmutter 18 axial abstützt. Die Kugelpfanne 26 weist eine von der Ringfläche 31 der Kugelscheibe 25 abgewandte Ringfläche 32 auf, gegen die sich das zweite Kupplungselement 2 axial abstützt.

Der Gewindebolzen 15 kann somit um den Mittelpunkt M der Ausgleichsanordnung 23 relativ zum zweiten Kupplungselement 2 gekippt werden. Dies ist erforderlich, um eine begrenzte Drehbewegung des ersten Kupplungselements 1 zum zweiten Kupplungselement 2 zu ermöglichen. In einer Ausgangsposition ist eine Längsachse L des Gewindebolzens 15 parallel zur Drehachse D angeordnet. Bei einem Verdrehen des ersten Kupplungselements 1 zum zweiten Kupplungselement 2 um die Drehachse D kippt der Gewindebolzen 15 um den Mittelpunkt M der beiden Ausgleichsanordnungen 23, 24 relativ zu den beiden Kupplungselementen 1, 2, so dass die Längsachse L derart gekippt wird, dass diese die Drehachse D mit Abstand kreuzt.

Um zu verhindern, dass der Gewindebolzen 15 innerhalb der Durchbrüche 19, 20 der beiden Kupplungselemente 1, 2 verkantet, ist zwischen den Durchbrüche 19, 20 der Kupplungselemente 1, 2 und dem Gewindebolzen 15 ausreichend Radialspiel vorgesehen.

Zusätzlich oder alternativ kann vorgesehen sein, dass der Durchbruch 20 des zweiten Kupplungselements 2 einen Konuswinkel aufweist, der sich zum ersten Kupplungselement 1 hin öffnet. Ebenso kann der Durchbruch 19 des ersten Kupplungselements 1 einen Konuswinkel aufweisen, der sich zum zweiten Kupplungselement 2 hin öffnet.

Das Druckelement 60 des ersten Kupplungselements 1 ist plattenförmig gestaltet und weist eine ringförmige im rechten Winkel zur Drehachse D angeordnete Stirnfläche 33 auf, die mit einer entsprechenden Anlagefläche 35 des Elastomerelements 3 in Anlage und zu dieser verspannt ist. Das Druckelement 61 des zweiten Kupplungselements 2 weist eine dem ersten Kupplungselement 1 zugewandte ringförmige Stirnfläche 34 auf, welche ebenfalls senkrecht zur Drehachse D angeordnet ist und mit einer entsprechenden Anlagefläche 36 des Elastomerelements 3 in Anlage und zu dieser verspannt ist. Bei dem Elastomerelement 3 handelt es sich ebenfalls um ein ringförmiges und scheibenförmiges Element, so dass über den gesamten Umfang ein Reibschluss zwischen dem Elastomerelement 3 und den beiden Kupplungselementen 1, 2 über die Stirnflächen 33, 34 und die Anlageflächen 35, 36 gewährleistet ist. Es ist alternativ möglich, dass mehrere über den Umfang verteilt angeordnete Elastomerelemente 3 zwischen den beiden Kupplungselementen 1, 2 angeordnet sind.

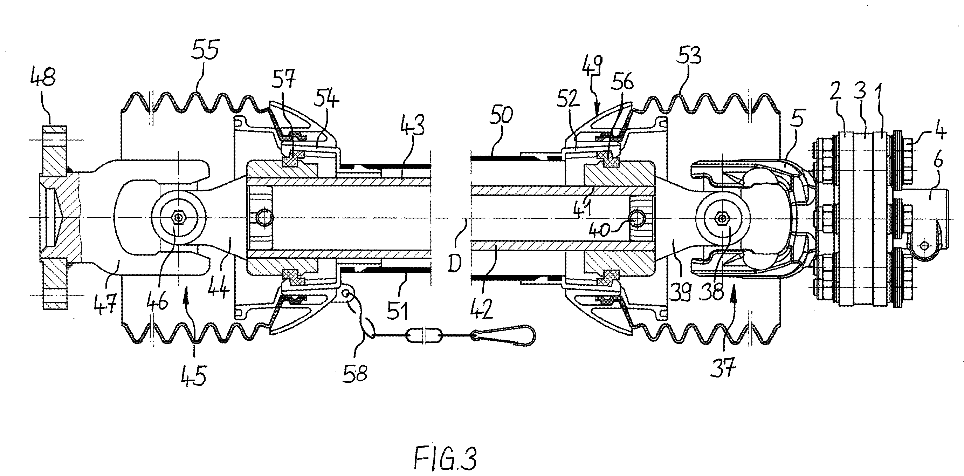

Figur 3 zeigt eine Gelenkwelle mit einer elastischen Kupplung gemäß den Figuren 1 und 2. Die Gelenkgabel 5, die mit dem zweiten Kupplungselement 2 fest verbunden ist, ist über ein Zapfenkreuz 38 mit einer weiteren Gelenkgabel 39 eines ersten Kreuzgelenks 37 derart verbunden, dass Drehmoment zwischen den Gelenkgabeln 5, 39 übertragen werden kann und diese zueinander abgewinkelt werden können. Die weitere Gelenkgabel 39 des ersten Kreuzgelenks 37 weist eine Bohrung 41 auf, mit der diese auf einem Innenrohr 42 sitzt und über einen Spannstift 40 drehgesichert ist. Das Innenrohr 42 ist, wie allgemein bekannt, über Längsverschiebemittel mit einem Außenrohr 43 derart verbunden, dass Drehmoment zwischen dem Innenrohr 42 und dem Außenrohr 43 übertragen werden kann und eine Längsverschiebung zwischen dem Innenrohr 42 und dem Außenrohr 43 in Richtung der Drehachse D ermöglicht wird.

Das Außenrohr 43 ist mit einer Gelenkgabel 44 an dem zweiten Kreuzgelenk 45 verbunden, wobei die Gelenkgabel 44 über ein Zapfenkreuz 38 mit einer weiteren Gelenkgabel 47 des zweiten Kreuzgelenks 45 verbunden ist, wobei das zweite Kreuzgelenk 45 funktional dem ersten Kreuzgelenk 37 entspricht. Die vom Außenrohr 43 abgewandte Gelenkgabel 47 ist mit einem Verbindungsflansch 48 fest verbunden, über welchen die Gelenkwelle mit einem Bauteil eines Antriebsstrangs verbunden werden kann.

Grundsätzlich ist es auch denkbar, dass das erste Kupplungselement 1 anstatt mit dem Verschluss 6 mit einem Verbindungsflansch 48 oder einem anderen Verbindungselement fest verbunden ist.

Zum Schutz vor drehenden Bauteilen weist die Gelenkwelle einen Gelenkwellenschutz 49 auf. Dieser umfasst ein äußeres Schutzrohr 50, welches um das Innenrohr 42 angeordnet ist, sowie ein inneres Schutzrohr 51, welches um das Außenrohr 43 angeordnet ist. Das äußere Schutzrohr 50 und das innere Schutzrohr 51 sind, wie allgemein bekannt, längsverschieblich zueinander gehalten. Das äußere Schutzrohr 50 ist über einen Adapterring 52 mit einem Schutzbalg 53 verbunden, wobei der Schutzbalg 53 das erste Kreuzgelenk 37 umgibt.

Das innere Schutzrohr 51 ist über einen Adapterring 54 mit einem Schutzbalg 55 verbunden, wobei der Schutzbalg 55 um das zweite Kreuzgelenk 45 angeordnet ist.

Die beiden Adapterringe 52, 54 sind über Gleitringe 56, 57 jeweils auf einer der Gelenkgabeln 39, 44 der beiden Kreuzgelenke 37, 45 drehbar gelagert. Der Adapterring 54 am zweiten Kreuzgelenk 45 weist eine Kette 58 auf, welche an einem feststehenden Bauteil befestigt werden kann, so dass der Adapterring 54 und damit der Gelenkwellenschutz 49 drehfest gehalten ist.

## Patentansprüche

1. Elastische Kupplung für landwirtschaftliche Antriebe, die um eine Drehachse (D) drehend antreibbar ist, umfassend:
zwei Kupplungselemente (1, 2) und
zumindest ein elastisches Element (3), das zwischen den beiden Kupplungselementen (1, 2) angeordnet ist,
**dadurch gekennzeichnet,**
**dass** das zumindest eine elastische Element (3) zwischen den beiden Kupplungselementen (1, 2) mittels zumindest einer Spanneinrichtung (4) axial eingespannt ist.

2. Elastische Kupplung nach Anspruch 1,
**dadurch gekennzeichnet,**
**dass** die elastische Kupplung einen Zentrierzapfen (11) aufweist, der koaxial zur Drehachse (D) angeordnet ist und fest mit dem ersten Kupplungselement (1) verbunden ist, und
**dass** das zweite Kupplungselement (2) und das elastische Element (3) jeweils mit einer zentralen Bohrung (9, 10) auf dem Zentrierzapfen (11) drehbar aufgenommen sind.

3. Elastische Kupplung nach Anspruch 2,
**dadurch gekennzeichnet,**
**dass** das zweite Kupplungselement (2) über eine Gleitlagerbuchse (59) auf dem Zentrierzapfen (11) gelagert ist.

4. Elastische Kupplung nach einem der Ansprüche 2 oder 3,
**dadurch gekennzeichnet,**
**dass** das zweite Kupplungselement (2) axial gegen den Zentrierzapfen (11) gesichert ist.

5. Elastische Kupplung nach einem der vorangehenden Ansprüche,
**dadurch gekennzeichnet,**
**dass** die zumindest eine Spanneinrichtung (4) gegen die beiden Kupplungselemente (1, 2) axial abgestützt ist und
**dass** die zumindest eine Spanneinrichtung (4) durch einen Durchbruch (21) im elastischen Element (3) hindurchgeführt ist.

6. Elastische Kupplung nach einem der vorangehenden Ansprüche,
**dadurch gekennzeichnet,**
**dass** die Kupplungselemente (1, 2) einander zugewandte Stirnflächen (33, 34) aufweisen, zwischen denen das elastische Element (3) eingespannt ist.

7. Elastische Kupplung nach einem der vorangehenden Ansprüche,
**dadurch gekennzeichnet,**
**dass** die zumindest eine Spanneinrichtung (4) durch Durchbrüche (19, 20) in den Kupplungselementen (1, 2) hindurchgeführt ist.

8. Elastische Kupplung nach einem der vorangehenden Ansprüche,
**dadurch gekennzeichnet,**
**dass** die elastische Kupplung mindestens drei Spanneinrichtungen (4) aufweist, die um die Drehachse (D) der elastischen Kupplung verteilt angeordnet sind.

9. Elastische Kupplung nach einem der vorangehenden Ansprüche,
**dadurch gekennzeichnet,**
**dass** die zumindest eine Spanneinrichtung (4) einen Spannbolzen (15) aufweist, der über Spannelemente (16, 18) gegen die Kupplungselemente (1, 2) axial abgestützt ist.

10. Elastische Kupplung nach Anspruch 9,
**dadurch gekennzeichnet,**
**dass** der Spannbolzen ein Gewindebolzen (15) mit Gewinde (17) ist, und dass die Spannelemente ein Schraubenkopf (16), der fest mit dem Gewindebolzen (15) verbunden ist, und eine auf das Gewinde aufgeschraubte Schraubenmutter (18) sind.

11. Elastische Kupplung nach einem der Ansprüche 9 oder 10,
**dadurch gekennzeichnet,**
**dass** zumindest eines der Spannelemente (16, 18) über eine Ausgleichsanordnung (23, 24) gegen das erste Kupplungselement (1) oder das zweite Kupplungselement (2) abgestützt ist.

12. Elastische Kupplung nach Anspruch 11,
**dadurch gekennzeichnet,**
**dass** die Ausgleichsanordnung (23, 24) eine Kugelscheibe (25) aufweist, die in einer Kugelpfanne (26) aufgenommen ist.

13. Elastische Kupplung nach einem der Ansprüche 9 bis 12,
**dadurch gekennzeichnet,**
**dass** zumindest eines der Spannelemente (16, 18) über eine Federanordnung (22) gegen das erste Kupplungselement (1) oder das zweite Kupplungselement (2) abgestützt ist.

14. Elastische Kupplung nach einem der vorangehenden Ansprüche,
**dadurch gekennzeichnet,**
**dass** das zumindest eine elastische Element ein Elastomerelement (3) ist.

15. Elastischen Kupplung nach einem der vorangehenden Ansprüche,
**dadurch gekennzeichnet,**
**dass** eines der beiden Kupplungselemente (2) eine Gelenkgabel (5) eines Kreuzgelenks (37) aufweist.

## Claims

1. Elastic coupling for agricultural drives, which can be rotatably driven around a rotation axis (D), comprising:
two coupling elements (1, 2) and
at least one elastic element (3), which is positioned between the two coupling elements (1, 2),
***characterised in***
**that** the at least one elastic element (3) is clamped axially between the two coupling elements (1, 2) by at least one clamping device (4).

2. Elastic coupling according to claim 1,
***characterised in***
**that** the elastic coupling is provided with a centering pin (11) which is coaxial with the rotation axis (D) and is rigidly fastened to the first coupling element (1), and that the second coupling element (2) and the elastic element (3) each are rotatably held with a central bore (9, 10) on the centering pin (11).

3. Elastic coupling according to claim 2, ***characterised in* that** the second coupling element (2) is held by a slide bearing bush (59) on the centering pin (11).

4. Elastic coupling according to one of claims 2 or 3, ***characterised in* that** the second coupling element (2) is locked axially against the centering pin (11).

5. Elastic coupling according to one of the previous claims,
***characterised in***
**that** the at least one clamping device (4) is axially supported against the two coupling elements (1, 2) and
**that** the at least one clamping device (4) is passed through an opening (21) in the elastic element (3).

6. Elastic coupling according to one of the previous claims, ***characterised in* that** the coupling elements (1, 2) have front surfaces (33, 34) that face each other, with the elastic element (3) clamped between them.

7. Elastic coupling according to one of the previous claims, ***characterised in* that** the at least one clamping device (4) is passed through openings (19, 20) in the coupling elements (1, 2).

8. Elastic coupling according to one of the previous claims, ***characterised in* that** the elastic coupling has at least three clamping devices (4) which are distributed around the rotation axis (D) of the elastic coupling.

9. Elastic coupling according to one of the previous claims, ***characterised in* that** the at least one clamping device (4) has a clamping bolt (15), which is axially supported against the coupling elements (1, 2) by clamping elements (16, 18).

10. Elastic coupling according to claim 9,
***characterised in***
**that** the clamping bolt is a threaded bolt (15) with thread (17), and
**that** the clamping elements consist of a screw head (16) which is rigidly fastened to the threaded bolt (15), and a nut (18) which is screwed onto the thread.

11. Elastic coupling according to one of claims 9 or 10, ***characterised in* that** at least one of the clamping elements (16, 18) is supported via a compensating assembly (23, 24) against the first coupling element (1) or the second coupling element (2).

12. Elastic coupling according to claim 11, ***characterised in* that** the compensating assembly (23, 24) has a spherical washer (25) which is held in a spherical socket (26).

13. Elastic coupling according to one of claims 9 to 12, ***characterised in* that** at least one of the clamping elements (16, 18) is supported via a spring assembly (22) against the first coupling element (1) or the second coupling element (2).

14. Elastic coupling according to one of the previous claims, ***characterised in* that** the at least one elastic element is an elastomeric element (3).

15. Elastic coupling according to one of the previous claims, ***characterised in* that** one of the two coupling elements (2) has a joint yoke (5) of a cardan joint (37).

## Revendications

1. Accouplement élastique pour des entraînements agricoles, lequel est susceptible d'être entraîné en rotation autour d'un axe de rotation (D), comprenant :
deux éléments d'accouplement (1, 2) et
au moins un élément élastique (3), qui est placé entre les deux éléments d'accouplement (1, 2),
**caractérisé en ce que**
l'au moins un élément élastique (3) est enserré en direction axiale entre les deux éléments d'accouplement (1, 2) au moyen d'au moins un système de serrage (4).

2. Accouplement élastique selon la revendication 1,
**caractérisé en ce que**
l'accouplement élastique comporte un ergot de centrage (11), qui est placé de manière coaxiale à l'axe de rotation (D) et qui est fixement relié avec le premier élément d'accouplement (1), et
**en ce que** le deuxième élément d'accouplement (2) et l'élément élastique (3) sont réceptionnés en rotation chacun par un perçage central (9, 10) sur l'ergot de centrage (11).

3. Accouplement élastique selon la revendication 2, **caractérisé en ce que**
le deuxième élément d'accouplement (2) est logé par l'intermédiaire d'une douille de palier lisse (59) sur l'ergot de centrage (11).

4. Accouplement élastique selon l'une quelconque des revendications 2 ou 3,
**caractérisé en ce que**
le deuxième élément d'accouplement (2) est bloqué en direction axiale contre l'ergot de centrage (11).

5. Accouplement élastique selon l'une quelconque des revendications précédentes,
**caractérisé en ce que**
l'au moins un système de serrage (4) est appuyé en direction axiale contre les deux éléments d'accouplement (1, 2) et
**en ce que** l'au moins un système de serrage (4) est guidé à travers un ajour (21) dans l'élément élastique (3).

6. Accouplement élastique selon l'une quelconque des revendications précédentes,
**caractérisé en ce que**
les éléments d'accouplement (1, 2) comportent des faces frontales (33, 34) dirigées l'une vers l'autre, entre lesquelles est enserré l'élément élastique (3).

7. Accouplement élastique selon l'une quelconque des revendications précédentes,
**caractérisé en ce que**
l'au moins un système de serrage (4) est guidé à travers des ajours (19, 20) dans les éléments d'accouplement (1, 2).

8. Accouplement élastique selon l'une quelconque des revendications précédentes,
**caractérisé en ce que**
l'accouplement élastique comporte au moins trois systèmes de serrage (4) qui sont placés en distribution autour de l'axe de rotation (D) de l'accouplement élastique.

9. Accouplement élastique selon l'une quelconque des revendications précédentes,
**caractérisé en ce que**
l'au moins un système de serrage (4) comporte un boulon de serrage (15) qui est appuyé en direction axiale par l'intermédiaire d'éléments de serrage (16, 18) contre les éléments d'accouplement (1, 2).

10. Accouplement élastique selon la revendication 9,
**caractérisé en ce que**
le boulon de serrage est un boulon fileté (15) pourvu d'un filetage (17), et
**en ce que** les éléments de serrage sont une tête de vis (16), qui est fixement reliée avec le boulon fileté (15) et un écrou (18) vissé sur le filetage.

11. Accouplement élastique selon l'une quelconque des revendications 9 ou 10,
**caractérisé**
**en ce qu'**au moins l'un des éléments de serrage (16, 18) s'appuie par l'intermédiaire d'un ensemble compensateur (23, 24) contre le premier élément d'accouplement (1) ou le deuxième élément d'accouplement (2).

12. Accouplement élastique selon la revendication 11,
**caractérisé en ce que**
l'ensemble compensateur (23, 24) comporte une rondelle sphérique (25) qui est logée dans un coussinet sphérique (26).

13. Accouplement élastique selon l'une quelconque des revendications 9 bis 12,
**caractérisé**
**en ce qu'**au moins l'un des éléments de serrage (16, 18) s'appuie par l'intermédiaire d'un ensemble de ressorts (22) contre le premier élément d'accouplement (1) ou le deuxième élément d'accouplement (2).

14. Accouplement élastique selon l'une quelconque des revendications précédentes,
**caractérisé en ce que**
l'au moins un élément élastique est un élément en élastomère (3).

15. Accouplement élastique selon l'une quelconque des revendications précédentes,
**caractérisé en ce que**
l'un des deux éléments d'accouplement (2) comporte une fourche d'articulation (5) d'un joint universel (37).
